# EUROPEAN PATENT APPLICATION

(11) **EP 2 463 339 A1**
(43) Date of publication of application: **13.06.2012**
(21) Application number: 10806372.8
(22) Date of filing: 28.07.2010
(51) Int. Cl.: C08L 67/02, B32B 27/18, B32B 27/36, C08F 279/06, C08G 63/66, C08L 21/00

(54) **POLYESTER RESIN COMPOSITION**

(30) Priority: 07.08.2009 JP 2009184744
(71) Applicant: Mitsubishi Gas Chemical Company, Inc., Tokyo 100-8324 (JP)
(72) Inventor: KAWABATA, Tadashi, Hiratsuka-shi Kanagawa 254-0016 (JP)
(74) Representative: Vossius & Partner
(86) International application number: PCT/JP2010/062695
(87) International publication number: WO 2011/016373

(57) **Abstract**

A polyester resin composition containing 70 to 99.5% by mass of a polyester resin (A) which contains a dicarboxylic acid unit and a diol unit and in which 1 to 60 mol% of the diol unit is a diol unit having a cyclic acetal skeleton, and 0.5 to 30% by mass of a core/shell type rubber which has an average particle size of 1 µm or less and which exhibits an absolute difference between the refractive index thereof and the refractive index of the polyester resin (A) is 0.02 or less.

## Description

### TECHNICAL FIELD

The present invention relates to a polyester resin composition comprising a diol unit having a cyclic acetal skeleton, and precisely to such a polyester resin composition capable of being used in the form of containers such as bottles, injection-molded articles, foams, and wrapping materials such as films and sheets.

### BACKGROUND ART

A polyester resin, especially polyethylene terephthalate (hereinafter this may be referred to as "PET") is a resin well balanced in mechanical performance, solvent resistance, flavor retainability, recyclability, and the like, and is much used mainly for bottles, sheets, films, and the like. However, PET has high crystallinity and therefore, when it is molded into thick articles or sheets, they may be whitened as crystallized and may therefore lose transparency. In addition, since the glass transition temperature thereof is 80°C or so, PET could not be used for applications that require high heat resistance and transparency, such as articles for use inside cars, wrapping materials for export and import, and wrapping materials for retort treatment or microwave oven heating.

On the other hand, polyethylene naphthalate (hereinafter this may be referred to as "PEN"), a transparent polyester resin of which the chemical structure is well similar to that of PET, is a polyester in which the dicarboxylic acid unit is a naphthalenedicarboxylic acid unit, and can be molded into articles (bottles and others) almost similar to those of PET, and the articles thereof are recyclable. PEN has a rigid molecular structure and is superior to PET in point of heat resistance (as having a glass transition temperature of about 110°C), gas barrier performance and others; however, PEN is extremely expensive and has high crystallinity like PET, and therefore, has a drawback in that, when PEN is molded into articles or sheets, they may be whitened as crystallized and may therefore lose transparency.

As opposed to these, a polyester resin containing a diol having a cyclic acetal skeleton is a polyester resin having high transparency and improved over PET and PEN in point of heat resistance thereof, and therefore can be used in applications requiring transparency and heat resistance. In addition, the crystallinity of the resin is suppressed, and therefore even when the resin is molded into thick articles or sheets, transparent molded articles can be readily produced with no failure such as whitening or the like owing to crystallization (for example, see Patent Documents 1 and 2).

Recently in the art, resins have become desired to have higher impact resistance owing to the tendency toward thin-walled articles for large-sized, shape-complicated and lightweight containers. As a means for improving the impact resistance of polyester resin, heretofore, adding an inorganic filler thereto has been tried and has achieved a certain effect for improving the impact resistance of the resin. On the other hand, many trials have been made for improving the impact resistance of the resin by adding a rubbery polymer or a rubber-containing polymer thereto (for example, see Patent Documents 3 to 5). In particular, a core/shell type polymer having a structure of a rubbery polymer surrounded by a glassy polymer is known to exhibit an effect of improving the impact resistance of the resin.

### CITATION LIST

### PATENT LITERATURE

[Patent Document 1] JP-A 2002-69165
[Patent Document 2] JP-A 2004-67830
[Patent Document 3] JP-A 6-145484
[Patent Document 4] JP-A 2005-23165
[Patent Document 5] JP-A 2005-263996

### SUMMARY OF THE INVENTION

### TECHNICAL PROBLEM

However, in case where the above-mentioned inorganic filler or rubbery polymer or rubber-containing polymer is added to a polyester resin, it could be effective for improving the impact resistance of the resin, but brings about a drawback of significantly detracting from the transparency of the resin, and therefore, it is not easy to satisfy all the requirements of good transparency, heat resistance and impact resistance. For example, the total light transmittance of Examples described in Patent Document 4 is from 81 to 84% and is lower by from 6 to 9% than the total light transmittance, 90%, of Comparative Example 1 not containing a rubbery elastic material. In addition, the haze of Examples described in Patent Document 4 is from 12 to 15%, and is higher than the haze, 2% of Comparative Example 1. Accordingly, it could not be said that the invention described in Patent Document 4 satisfies both impact resistance and transparency.

A problem to be solved by the present invention is to provide a polyester resin composition excellent in transparency, heat resistance and impact resistance.

### SOLUTION TO PROBLEM

Specifically, the present invention provides the following [1] to [4].
[1] A polyester resin composition comprising 70 to 99.5% by mass of a polyester resin (A) which comprises a dicarboxylic acid unit and a diol unit and in which 1 to 60 mol% of the diol unit is a diol unit having a cyclic acetal skeleton, and 0.5 to 30% by mass of a core/shell type rubber which has an average particle size of 1 µm or less and which exhibits an absolute difference between the refractive index thereof and the refractive index of the polyester resin (A) is 0.02 or less.
[2] A sheet formed of the polyester resin composition according to the above [1].
[3] A multilayer sheet containing at least one layer formed of the polyester resin composition according to the above [1].
[4] An injection-molded article formed of the polyester resin composition according to the above [1].

### ADVANTAGEOUS EFFECTS OF INVENTION

The polyester resin composition of the invention is excellent in impact resistance not only at room temperature but also at low temperatures, while keeping the transparency and the heat resistance thereof. Accordingly, the resin composition can be widely utilized in the form of, for example, containers such as bottles and the like, as well as injection-molded articles, foams, wrapping materials such as films, sheets and the like, in various fields of an electric/electronic device field of OA appliances, information/communication appliances, home electrical appliances and the like, an automotive field, a food field, an architecture field, and the like.

### DESCRIPTION OF EMBODIMENTS

### [Polyester Resin Composition]

The polyester resin composition of the present invention comprises 70 to 99.5% by mass of a polyester resin (A) which comprises a dicarboxylic acid unit and a diol unit and in which 1 to 60 mol% of the diol unit is a diol unit having a cyclic acetal skeleton, and 0.5 to 30% by mass of a core/shell type rubber which has an average particle size of 1 µm or less and which exhibits an absolute difference between the refractive index thereof and the refractive index of the polyester resin (A) is 0.02 or less. In the present invention, the resin composition comprises a specific core/shell type rubber, which has an average particle size of 1 µm or less and which exhibits the absolute difference between the refractive index thereof and the refractive index of the polyester resin (A) is 0.02 or less, in a predetermined amount, therefore having improved impact resistance not detracting from the transparency thereof.

### (Polyester Resin (A))

The polyester resin (A) for use in the polyester resin composition of the invention comprises a dicarboxylic acid unit and a diol unit, in which I to 60 mol% of the diol unit is a diol unit having a cyclic acetal skeleton.

In the diol unit of the polyester resin (A), the content of the diol unit having the cyclic acetal skeleton is from 1 to 60 mol%, from the viewpoint of high transparency and heat resistance, preferably from 10 to 55 mol%, more preferably from 20 to 50 mol%.
Preferably, the diol unit having the cyclic acetal skeleton is a unit derived from a compound represented by the following formula (1) or (2):

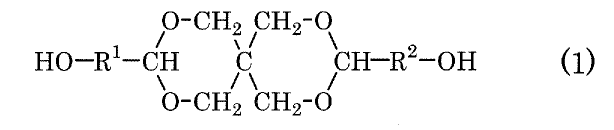

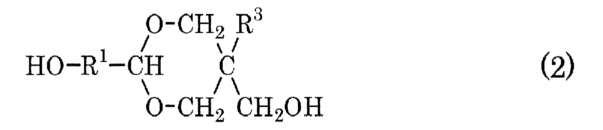

In the formulae, R¹ and R² each independently represent a hydrocarbon group selected from the group consisting of an aliphatic hydrocarbon group having from 1 to 10 carbon atoms, an alicyclic hydrocarbon group having from 3 to 10 carbon atoms, and an aromatic hydrocarbon group having from 6 to 10 carbon atoms. R³ represents a hydrocarbon group selected from the group consisting of an aliphatic hydrocarbon group having from 1 to 10 carbon atoms, an alicyclic hydrocarbon group having from 3 to 10 carbon atoms, and an aromatic hydrocarbon group having from 6 to 10 carbon atoms.
Preferably, R¹ and R² each are an aliphatic hydrocarbon group having from 1 to 10 carbon atoms, more preferably from 2 to 10 carbon atoms, even more preferably from 4 to 8 carbon atoms. Its examples include divalent aliphatic hydrocarbon groups such as -CH₂-, -CH₂CH₂-, -CH₂CH₂CH₂-, -CH₂CH(CH₃)-, -CH₂CH₂CH₂CH₂-, -CH₂C(CH₃)₂-,
Preferably, R³ is an aliphatic hydrocarbon group having from 1 to 10 carbon atoms, more preferably from 2 to 10 carbon atoms, even more preferably from 4 to 8 carbon atoms. Its examples include monovalent aliphatic hydrocarbon groups such as a methyl group, an ethyl group, a propyl group, an isopropyl group, a butyl group, an isobutyl group, a t-butyl group.

As the compound represented by the above-mentioned formula (1) or (2), especially preferred is 3,9-bis(1,1-dimethyl-2-hydroxyethyl)-2,4,8,10-tetroxaspiro[5.5]undecane, or 5-methylol-5-ethyl-2-(1,1-dimethyl-2-hydroxyethyl)-1,3-dioxane.

The other diol unit than the diol unit having the cyclic acetal skeleton is not specifically defined. The compound capable of constituting the diol unit includes aliphatic diols such as ethylene glycol, trimethylene glycol, 1,4-butanediol, 1,5-pentanediol, 1,6-hexanediol, diethylene glycol, propylene glycol, neopentyl glycol; polyether diols such as polyethylene glycol, polypropylene glycol, polybutylene glycol,; alicyclic diols such as 1,3-cyclohexanedimethanol, 1,4-cyclohexanedimethanol, 1,2-decahydronaphthalene-dimethanol, 1,3-decahydronaphthalene-dimethanol, 1,4-decahydronaphthalene-dimethanol, 1,5-decahydronaphthalene-dimethanol, 1,6-decahydronaphthalene-dimethanol, 2,7-decahydronaphthalene-dimethanol, tetralin-dimethanol, norbomane-dimethanol, tricyclodecane-dimethanol, pentacyclododecane-dimethanol; bisphenols such as 4,4'-(1-methylethylidene)bisphenol, methylene-bisphenol (bisphenol F), 4,4'-cyclohexylidene-bisphenol (bisphenol Z), 4,4'-sulfonylbisphenol (bisphenol S); alkylene oxides to the above-mentioned bisphenols; aromatic dihydroxy compounds such as hydroquinone, resorcin, 4,4'-dihydroxybiphenyl, 4,4'-dihydroxydiphenyl ether, 4,4'-dihydroxydiphenyl-benzophenone; alkylene oxide adducts to the above-mentioned aromatic dihydroxy compounds.
From the viewpoint of the mechanical performance and the economical aspect of the polyester resin composition of the present invention, the diol unit is preferably a diol unit derived from at least one diol selected from the group consisting of ethylene glycol, diethylene glycol, trimethylene glycol, 1,4-butanediol and 1,4-hexanediol, more preferably a diol unit derived from ethylene glycol. The diol units derived from the exemplified compounds may be used here either singly or as combined.

The dicarboxylic acid unit of the polyester resin (A) for use in the polyester resin composition of the present invention is not specifically defined. As the compound capable of constituting the dicarboxylic acid unit, there may be exemplified aliphatic dicarboxylic acids such as succinic acid, glutaric acid, adipic acid, pimelic acid, suberic acid, azelaic acid, sebacic acid, dodecanedicarboxylic acid, cyclohexanedicarboxylic acid, decanedicarboxylic acid, norbomanedicarboxylic acid, tricyclodecanedicarboxylic acid, pentacyclododecanedicarboxylic acid; and aromatic dicarboxylic acids such as terephthalic acid, isophthalic acid, phthalic acid, 2-methylterephthalic acid, 1,4-naphthalenedicarboxylic acid, 1,5-naphthalenedicarboxylic acid, 2,6-naphthalenedicarboxylic acid, 2,7-naphthalenedicarboxylic acid, biphenyldicarboxylic acid, tetralindicarboxylic acid.
From the viewpoint of the mechanical performance and the economical aspect of the polyester resin composition of the present invention, the dicarboxylic acid unit is preferably a dicarboxylic acid unit derived from an aromatic dicarboxylic acid, more preferably a dicarboxylic acid unit derived from at least one dicarboxylic acid selected from the group consisting of terephthalic acid, isophthalic acid, 1,4-naphthalenedicarboxylic acid, 1,5-naphthalenedicarboxylic acid, 2,6-naphthalenedicarboxylic acid and 2,7-naphthalenedicarboxylic acid. Especially preferred is a dicarboxylic acid unit derived from at least one dicarboxylic acid selected from the group consisting of terephthalic acid, 2,6-naphthalenedicarboxylic acid and isophthalic acid; and above all, from the viewpoint of the economical aspect, most preferred is a dicarboxylic acid unit derived from terephthalic acid. The dicarboxylic acid units derived from the exemplified compounds may be used here either singly or as combined.

The method for producing the polyester resin (A) is not specifically defined, for which any method is employable. For example, there may be mentioned a melt polymerization method or a solution polymerization method such as an interesterification method and a direct esterification method. Various types of interesterification catalysts, esterification catalysts, etherification inhibitors, polymerization catalysts, stabilizers including heat stabilizers and light stabilizers, and polymerization regulators may be used here in any desired manner.
As examples of the interesterification catalyst, there may be mentioned compounds of manganese, cobalt, zinc, titanium, calcium or the like; as those of the esterification catalyst, there may be mentioned compounds of manganese, cobalt, zinc, titanium, calcium or the like; and as those of the etherification inhibitor, there may be mentioned amine compounds and the like.
As examples of the polycondensation catalyst, there may be mentioned compounds of germanium, antimony, tin, titanium or the like. Adding various types of phosphorus compounds such as phosphoric acid, phosphorous acid, phenylphosphonic acid or the like as a heat stabilizer is effective. In addition, a light stabilizer, an antistatic agent, a lubricant, an antioxidant, a mole release agent and the like may be added.
The time at which the compound capable of constituting the diol unit having the cyclic acetal skeleton (for example, the compound represented by the above-mentioned formula (1) or (2)) is not specifically defined, and the compound may be added after the esterification reaction or the interesterification reaction. In the case, water may be added in the direct esterification method for improving the slurry property of the system.

The melt viscosity of the polyester resin (A) is, when measured at a temperature of 240°C and a shear rate of 100 sec⁻¹, preferably from 700 to 5,000 Pa·s, more preferably from 800 to 4,000 Pa.s, even more preferably from 1,000 to 3,000 Pa·s. When the melt viscosity falls within the above range, then the polyester resin composition is excellent in moldability, and for example, by suitably selecting the type, the combination and the amount to be added of the core/shell type rubber and by adding the rubber to the polyester resin (A) of which the viscosity falls within the above range, a molded article satisfying transparency, heat resistance and impact resistance can be produced in a simplified manner. The melt viscosity can be measured according to the method described in Examples.

The content of the polyester resin (A) in the polyester resin composition of the present invention is from 70 to 99.5% by mass of the polyester resin composition, preferably from 80 to 99% by mass, more preferably from 90 to 97% by mass. When the content of the polyester resin (A) is more than 99.5% by mass, then the impact resistance would be insufficient since a sufficient amount of the core/shell type rubber could not be added to the resin. On the other hand, when the content of the polyester resin (A) is less than 70% by mass, then the heat resistance may lower and the transparency may lower.

### (Core/Shell Type Rubber)

The polyester resin composition of the present invention contains a specific core/shell type rubber. Accordingly, the polyester resin composition of the present invention is excellent in impact resistance.
The core/shell type rubber has a structure of a rubbery polymer surrounded by a glassy polymer. The core/shell type rubber includes butadiene-acrylonitrile-styrene-series core/shell type rubber (ABS-series core/shell type rubber), methyl methacrylate-butadiene-styrene-series core/shell type rubber (MBS-series core/shell type rubber), methyl methacrylate-butyl acrylate-styrene-series core/shell type rubber (MAS-series core/shell type rubber), octyl acrylate-butadiene-styrene-series core/shell type rubber (MABS-series core/shell type rubber), alkyl acrylate-butadiene-acrylonitrile-styrene-series core/shell type rubber (AABS-series core/shell type rubber), butadiene-styrene-series core/shell type rubber (SBR-series core/shell type rubber), methyl methacrylate-butyl acrylate-series core/shell type rubber (MA-series core/shell type rubber), and the like. Preferred are MBS-series core/shell type rubber, MAS-series core/shell type rubber, SBR-series core/shell type rubber; more preferred are MBS-series core/shell type rubber, SBR-series core/shell type rubber; even more preferred is MBS-series core/shell type rubber. The core/shell type rubber is limited to those mentioned above, and also usable here are KANE ACE B series, M series, FM series manufactured by Kaneka Corporation (all trade names). These may be used here either singly or as combined.

The MBS-series core/shell type rubber is one prepared through graft polymerization of a butadiene-styrene copolymer (core ingredient) with a methyl methacrylate ingredient and optionally an aromatic vinyl ingredient, a vinyl cyanide ingredient and any other methacrylate ingredient (shell ingredient), for example, according to a method of bulk polymerization, suspension polymerization, bulk/suspension polymerization, solution polymerization, emulsion polymerization or the like. Above all, especially preferred are those prepared through graft polymerization according to an emulsion polymerization method.

The other methacrylate to constitute the MBS-series core/shell type rubber includes an ester with an alkyl having from 2 to 4 carbon atoms. The aromatic vinyl compound includes, for example, styrene, halogenostyrenes, vinyltoluene, α-methylstyrene, vinylnaphthalene. Especially preferred is styrene. The vinyl cyanide compound includes acrylonitrile, methacrylonitrile, α-halogenoacrylonitrile, acrylonitrile is especially preferred.

The average particle size of the core/shell type rubber is 1 µm or less, preferably 0.8 µm or less, more preferably 0.7 µm or less. When the average particle size of the core/shell type rubber is more than 1 µm, then the probability that the light having reached the core/shell type rubber may diffuse to worsen the transparency of the resin article may increase. The average particle size of the core/shell type rubber may be measured according to the method described in Examples.

The difference of absolute value between the refractive index of the core/shell type rubber and the refractive index of the polyester resin (A) is 0.02 or less, preferably 0.018 or less, more preferably 0.015 or less. When the difference of absolute value in the refractive index is more than 0.02, then light may diffuse at the interface between the polyester resin (A) and the core/shell type rubber and the transparency may be thereby lowered. The refractive index may be measured with an Abbe's refractiometer at 23°C in accordance with JIS K 7142 or may be computed on the basis of the literature data (Polymer Handbook, 4th Ed., by JOHN WILEY & SONS, etc.).

The content of the core/shell type rubber in the polyester resin composition of the present invention is from 0.5 to 30% by mass of the polyester resin composition, preferably from 1 to 25% by mass, more preferably from 3 to 20% by mass. When the content of the core/shell type rubber is more than 30% by mass, then the core/shell type rubber may aggregate to worsen the transparency. In addition, the case is unfavorable since there may occur failure in extrusion and molding and the physical properties such as the ensile strength, the heat resistance and others of the resin article may greatly lower. When the content of the core/shell type rubber is less than 0.5% by mass, then the impact resistance may be insufficient since a sufficient amount of the core/shell type rubber could not be contained in the composition.

### [Method for Producing Polyester Resin Composition]

The method for producing the polyester resin composition of the present invention is not specifically defined, for which, for example, employable here are a method of polymerizing the polyester resin (A) in the presence of the core/shell type rubber; a method of adding the core/shell type rubber to the polyester resin (A) in a molten state before the resin is drawn out from the polymerization chamber in the polymerization step; a method of dry-blending the core/shell type rubber with the polyester resin (A) after pelletized; a method of further melt-kneading the dry blend in an extruder or the like; a method of adding the core/shell type rubber to the polyester resin (A) melted in an extruder or the like. Of those, preferred is the method comprising dry-blending the pellets of the polyester resin (A) with the core/shell type rubber followed by melt-kneading the blend in an extruder or the like, since, according to the method, it is easy to control the amount to be added of the ingredient in any desired manner.

Any known apparatus may be used for mixing and kneading the polyester resin (A) and the core/shell type rubber, for which, for example, there may be mentioned mixing and kneading apparatus such as tumbler, high-speed mixer, Nauter mixer, ribbon blender, mixing roll, kneader, intensive mixer, single-screw extruder, double-screw extruder. In addition, also usable are liquid mixing apparatus such as gate mixer, butterfly mixer, multipurpose mixer, dissolver, static mixer. Moreover, a resin containing a high-concentration core/shell type rubber and a polyester resin may be mixed according to and using the above-mentioned method and apparatus.

The polyester resin composition of the invention may contain various additives and molding aids such as light stabilizer, UV absorbent, antistatic agent, heat stabilizer, plasticizer, extender, delusterant, drying regulator, antistatic agent, precipitation inhibitor, surfactant, flow improver, drying oil, wax, filler, colorant, reinforcing agent, foaming agent, surface smoother, leveling agent, curing promoter. In addition, the resin composition may contain any other resin or oligomer such as polyolefin, polyester, polyamide, polycarbonate, acrylonitrile resin, vinyl chloride resin, vinyl acetate resin, polyacrylic acid, polymethacrylic acid, polystyrene, ABS resin, polyimide, AS resin.

### [Molded Article of Polyester Resin Composition]

The polyester resin composition of the invention may be molded in any desired method, and can be used in various applications of injection-molded articles, extrusion-molded articles, sheets, sheet-molded articles, unstretched films, stretched films, injection-blow bottles, direct-blow bottles, foams, and the like.

### (Multilayer Sheet)

The multilayer sheet of the present invention has at least one layer of the polyester resin composition of the present invention, and preferably has at least one layer of the polyester resin composition of the invention and at least one layer of any other one than the polyester resin composition of the present invention. Preferably, at least one layer of any other one than the polyester resin composition of the present invention is a resin layer containing at least one resin mainly selected from the group consisting of polyester resin, polycarbonate resin, acrylic resin, polystyrene resin and polymethyl methacrylate-styrene resin. In case where the multilayer sheet of the present invention comprises a skin layer and a core layer, the polyester resin composition of the present invention may be used for at least one of the skin layer and the core layer of the multilayer sheet with no specific limitation, but from the viewpoint of improving the impact resistance and the heat resistance of the sheet, preferably, the layer of the polyester resin composition of the present invention is the skin layer.

The resin capable of being multilayered with the polyester resin composition of the present invention includes polyester resins such as polyethylene terephthalate, polyethylene naphthalate, isophthalic acid-modified polyethylene terephthalate, 1,4-cyclohexanedimethanol-modified polyethylene terephthalate, polyarylate; as well as polycarbonate resins, acrylic resins, polystyrene resins, polymethyl methacrylate-styrene resins, acrylonitrile-butadiene-styrene resins, vinyl chloride resins, alicyclic polyolefin resins. Of those, preferred are polyester resins, polycarbonate resins, acrylic resins, polystyrene resins and polymethyl methacrylate-styrene resins as they can be multilayered technically with ease, and more preferred are polyester resins and polycarbonate resins.

As the production method for the multilayer sheet of the present invention, employable is any know lamination technique such as a coextrusion method, a coextrusion lamination method, an extrusion lamination method, a dry lamination method. For the lamination, a suitable adhesive or an adhering resin may be used between the resins.

The thickness of the constitutive layers of the multilayer sheet of the present invention may be determined depending on the use of the sheet, the type of the resin to form the layer, the number of the layers, or the like. In general, the thickness is from 10 µm to 10 mm. The total thickness of the multilayer sheet may vary, depending on the use thereof, and for example, for sheets for food, the thickness may be from 0.1 to 1 mm; and for thick sheets for construction materials, product displays and the like the thickness may be from 1 to 40 mm. The number of the layers of the polyester resin composition layer of the present invention and the other resin layer may be generally up to 6.

### EXAMPLES

The invention is described in more detail with reference to the following Examples; however, the scope of the invention is not restricted by these Examples.

The starting materials used in Examples and Comparative Examples are mentioned below.
(1) MBS-series core/shell type rubber: B-521 (trade name, manufactured by Kaneka Corporation), refractive index 1.54
(2) MBS-series core/shell type rubber: M-300 (trade name, manufactured by Kaneka Corporation), refractive index 1.56
(3) MA-series core/shell type rubber: M-400 (trade name, manufactured by Kaneka Corporation), refractive index 1.49
(4) Styrene-butadiene copolymer: Nipol NS310S (trade name, manufactured by Zeon Corporation), rubbery block polymer (ground to have a diameter of from 1 to 5 mm or so before use), refractive index 1.53
(5) Butadiene rubber: Nipol BR1220 (trade name, manufactured by Zeon Corporation), rubbery block polymer (ground to have a diameter of from 1 to 5 mm or so before use), refractive index 1.52
(6) PET: UNIPET RT553C (trade name, manufactured by Nippon Unipet Co., Ltd.), refractive index 1.57
(7) PC: E-2000 (trade name, manufactured by Mitsubishi Engineering-Plastics Corporation)

### [Evaluation Methods]

Evaluation methods for the multilayer sheet in Examples and Comparative Examples are as follows.

### (1) Average Particle Size of Core/Shell Type Rubber or Rubbery Polymer:

An ultrathin section of the molded article was dyed with osmic acid, and on the transmission electron microscope (TEM) picture thereof, the average particle size (µm) of the dyed rubbery polymer was determined.

### (2) Impact Resistance:

The impact resistance was determined as follows: A single-layer sheet and a multilayer sheet having a thickness of 0.35 mm obtained according to a T-die extrusion method were conditioned in an atmosphere at 23°C and a relative humidity of 50% for 48 hours, then analyzed with a film impact tester (Model IFT-60) manufactured by Orientec Co., Ltd. under the same condition to measure the impact punching strength thereof. The test was carried out at two temperatures of 23°C and -20°C. Concretely, a semispherical impact ball fixed to the top of a pendulum was made to hit the test piece and the workload thereof necessary for forming a hole in the test piece was measured, and the value computed by dividing the workload by the thickness of the sheet indicates the impact resistance of the sheet.

### (3) Heat Resistance:

A single-layer sheet and a multilayer sheet having a thickness of 0.35 mm were cut into square test pieces of 100 mm × 100 mm in which the extrusion direction of the sheet was taken as the longitudinal direction and the cross direction thereof was as the lateral direction; and the test pieces were heated in an oven at intervals of 5°C for 30 minutes. After heated, the shrinkage of the test piece was measured in both the longitudinal direction and the lateral direction; and the highest temperature at which the shrinkage was not more than 1% indicates the heat resistance of the sheet.

### (4) Total Light Transmittance and Haze:

Total light transmittance and haze were determined as follows: In accordance with JIS K-7105 and ASTM D1003, a single-layer sheet and a multilayer sheet having a thickness of 0.35 mm were conditioned for 48 hours, and then measured in an atmosphere at 23°C and a relative humidity of 50%. The apparatus used for the measurement was a haze meter (Model COH-300A) manufactured by Nippon Denshoku Industries Co., Ltd.

### Production Examples 1 and 2:

### [Production of Polyester Resins (A-1) and (A-2)]

Terephthalic acid and ethylene glycol, each in an amount shown in Table 1, were fed into a polyester resin production apparatus having a capacity of 150 liters and equipped with a packed tower-type rectifier, a partial condenser, a total condenser, a cold trap, a stirrer, a heating unit and a nitrogen-introducing tube, and esterified therein according to an ordinary method. Ethylene glycol and germanium dioxide for depolymerization, each in an amount shown in Table 1, were added to the obtained ester, which was thus depolymerized in a nitrogen current atmosphere at 225°C. The reaction was continued for 3 hours with removing the formed water through evaporation, and then ethylene glycol was evaporated away at 215°C and under 13.3 kPa. Tetra-n-butyl titanate, potassium acetate, triethyl phosphate and 3,9-bis(1,1-dimethyl-2-hydroxyethyl)-2,4,8,10-tetroxaspiro[5.5]undecane, each in an amount shown in Table 1, were added to the obtained ester, and reacted at 225°C and under 13.3 kPa for 3 hours. The obtained ester was heated under reduced pressure, and polycondensed finally at 270°C in high vacuum (at most 300 Pa), and when the system had a predetermined melt viscosity, the reaction was stopped to give polyester resins (A-1) and (A-2).

The meanings of the abbreviations in Table 1 are as follows:
PTA: Terephthalic acid
SPG: 3,9-Bis(1,1-dimethyl-2-hydroxyethyl)-2,4,8,10-tetroxaspiro[5.5]undecane
EG: Ethylene glycol
GeO₂: Germanium dioxide
TBT: Tetra-n-butyl titanate
AcOK: Potassium acetate
TEP: Triethyl phosphate

Evaluation methods for the polyester resins (A-1) and (A-2) are as follows:

### (1) Proportion of diol unit having cyclic acetal skeleton:

The proportion of the diol unit having the cyclic acetal skeleton in the polyester resin was determined as follows: 20 mg of the polyester resin was dissolved in 1 g of heavy chloroform and analyzed for ¹H-NMR, and from the peak area ratio, the proportion was computed. As the apparatus for the measurement, used was an apparatus FT-NMR (manufactured by JEOL, trade name: JNM-AL400) at 400 MHz.

### (2) Glass transition temperature:

The glass transition temperature of the polyester resin was determined as follows, using a differential scanning calorimeter (manufactured by Shimadzu Corporation, trade name: DSC/TA-50WS). 10 mg of a sample was put into an aluminum open chamber, and analyzed in a nitrogen gas (30 ml/min) current atmosphere at a heating rate of 20°C/min; and the temperature changed by 1/2 of the difference from the base line on the DSC curve before and after transition was taken as the glass transition temperature of the sample.

### (3) Molecular weight (number-average molecular weight Mn, weight-average molecular weight Mw, molecular weight distribution Mw/Mn):

2 mg of the polyester resin was dissolved in 20 g of chloroform, and analyzed through gel permeation chromatography (GPC), in which the data calibrated with a standard polystyrene were taken as Mn and Mw/Mn. For GPC, used was TOSOH 8020 manufactured by Tosoh Corporation with two columns of GMHHR-L and one column of TSK G5000HR manufactured by Tosoh Corporation connected thereto, at a column temperature of 40°C (all trade names). As an eluent, chloroform was applied at a flow rate of 1.0 ml/min, and the resulting eluate was analyzed with a UV detector.

### (4) Melt viscosity:

As an apparatus for measurement, used was a capillograph (manufactured by Toyo Seiki Seisaku-sho, Ltd., trade name: Capillograph 1C), and the sample was analyzed at a temperature of 240°C. The preheating time was 1 minute, the nozzle diameter was 1 mm, the nozzle length was 10 mm, and the shear rate was 100 (1/sec).

### (5) Refractive index:

As an apparatus for measurement, used was a multiwavelength Abbe's refractiometer (manufactured by Atago Co. Ltd., trade name: DR-M2); and the same was measured at 23°C and at a wavelength of 589 nm in accordance with JIS K 7142.

**Table 1**

| | | Polyester Resin (A-1) | Polyester Resin (A-2) |
|---|---|---|---|
| Ingredients incorporated in polymerization | | | |
| Dicarboxylic acid component (g) | | | |
| | PTA | 37634 | 33093 |
| Diol component (g) | | | |
| | SPG | 21375 | 27891 |
| | EG | 15888 | 13971 |
| | EG for depolymerization | 15045 | 13229 |
| Germanium compound (g) | | | |
| | GeO₂ | 5.9 | 5.2 |
| Titanium compound (g) | | | |
| | TBT | 3.9 | 3.4 |
| Basic compound (g) | | | |
| | AcOK | 4.4 | 3.9 |
| Phosphorus compound (g) | | | |
| | TEP | 20.6 | 18.1 |

| Evaluation Results of Polyester Resin | | | |
|---|---|---|---|
| Proportion of diol unit having cyclic acetal skeleton (mol%) | | 30 | 45 |
| Glass transition temperature (°C) | | 101 | 110 |
| Number-average molecular weight Mn (× 10,000) | | 1.66 | 1.71 |
| Molecular weight distribution Mw/Mn | | 3.9 | 3.6 |
| Melt viscosity (Pa·s) | | 1600 | 2100 |
| Refractive index | | 1.55 | 1.54 |

### Examples 1 to 6:

### [Production of Polyester Resin Composition]

A core/shell type rubber of the type and the amount shown in Tables 2 and 3 was dry-blended with the polyester resin (A-1) or (A-2), and then melt-kneaded in an extruder to prepare the polyester resin composition shown in Tables 2 and 3.

### [Production Method for Single-Layer Sheet]

The polyester resin composition was extruded into a single-layer sheet (thickness 0.35 mm) according to a T-die extrusion method, using a vent-equipped 65-mm twin-screw extruder with venting evaporation. The evaluation results of the single-layer sheet are shown in Table 2.

### [Production Method for Multilayer Sheet]

A core layer material was extruded out through a vent-equipped 65-mm twin-screw extruder with venting evaporation, while, on the other hand, a rubbery polymer was blended into a skin layer material and extruded out through a vent-equipped 30-mm twin-screw extruder with venting evaporation, thereby producing a two-type three-layer multilayer sheet via a multi-manifold die (total thickness of multilayer sheet: about 0.35 mm, skin layer thickness: about 0.04 mm). The evaluation results of the multilayer sheet are shown in Table 3.

### Comparative Examples 1 to 6:

A rubbery polymer of the type and the amount shown in Tables 4 to 6 was dry-blended into the polyester resin of the type and the amount shown in Tables 4 to 6, and then melt-kneaded in an extruder to give the polyester resin or the polyester resin composition shown in Tables 4 to 6. Using the obtained polyester resin or polyester resin composition and in the same manner as above, single-layer or multilayer sheets were produced. The evaluation results of the single-layer or multilayer sheets are shown in Tables 4 to 6.

**Table 2**

| [Evaluation Results of Single-Layer Sheets] | | | | | |
|---|---|---|---|---|---|
| Example No. | | | Example 1 | Example 2 | Example 3 |
| Polyester Resin (A) | | | Polyester | Polyester (A-2) (A-1) (A-2) | Polyester |
| Core/Shell Type Rubber | | | B-521 | B-521 | M-300 |
| | content (% by mass) | | 5 | 3 | 1 |
| | Absolute difference in refractive index from polyester resin (A) | | 0 | 0.01 | 0.02 |

| Evaluation Results | | | | | |
|---|---|---|---|---|---|
| | Thickness of sheet (mm) | | 0.35 | 0.35 | 0.35 |
| | Average particle diameter of core/shell type rubber (µm) | | 0.5 | 0.4 | 0.5 |
| | Film impact value (kg·cm/cm) | | | | |
| | | Test temperature: 23°C | 1600 | 1540 | 1150 |
| | | Test temperature: -20°C | 1130 | 950 | 530 |
| | Total light transmittance (%) | | 91.7 | 91.7 | 90.5 |
| | Haze value (%) | | 1.5 | 1.1 | 4.8 |
| | Heat-resistant temperature (°C) | | 105 | 95 | 105 |

**Table 3**

| [Evaluation Results of Multilayer Sheets] | | | | | |
|---|---|---|---|---|---|
| Example No. | | | Example 4 | Example 5 | Example 6 |
| Skin Layer | Polyester Resin (A) | | Polyester (A-2) | Polyester (A-1) | Polyester (A-2) |
| | Core/Shell Type Rubber | | B-521 | M-300 | B-521 |
| | | content (% by mass) | 3 | 1 | 7 |
| | | Absolute difference in | | | |
| | | refractive index from | 0 | 0.01 | 0 |
| | | polyester resin (A) | | | |
| Core Layer | | | PET | PET | PC |

| Evaluation Results | | | | | |
|---|---|---|---|---|---|
| Thickness of sheet (mm) | | | 0.35 | 0.35 | 0.35 |
| Average particle diameter of core/shell type rubber (µm) | | | 0.5 | 0.4 | 0.5 |
| Film impact value (kg·cm/cm) | | | | | |
| | Test temperature: 23°C | | 1600 | 1320 | 1950 |
| | Test temperature: -20°C | | 1100 | 590 | 1450 |
| Total light transmittance (%) | | | 91.2 | 90.6 | 91.0 |
| Haze value (%) | | | 1.8 | 3.8 | 2.5 |
| Heat-resistant temperature (°C) | | | 105 | 95 | 145 |

**Table 4**

| [Evaluation Results of Single-Layer Sheets] | | | | | |
|---|---|---|---|---|---|
| Comparative Example No. | | | Comparative Example 1 | Comparative Example 2 | Comparative Example 3 |
| Polyester Resin (A) | | | Polyester (A-2) | Polyester (A-2) | Polyester (A-1) |
| Core/Shell Type Rubber | | | - | M-400 | - |
| Rubbery Polymer | | | - | - | Nipol NS310S |
| | content (% by mass) | | | - 5 | 5 |
| | Absolute difference in refractive index from polyester resin (A) | | - | 0.05 | 0.02 |

| Evaluation Results | | | | | |
|---|---|---|---|---|---|
| | Thickness of sheet (mm) | | 0.35 | 0.35 | 0.35 |
| | Average particle diameter of core/shell type rubber or rubbery polymer (µm) | | - | 0.3 | 40 |
| | Film impact value (kg·cm/cm) | | | | |
| | | Test temperature: 23 °C | 1000 | 1460 | 1170 |
| | | Test temperature: -20°C | 200 | 1000 | 590 |
| | Total light transmittance (%) | | 91.9 | 67.2 | 81.4 |
| | Haze value (%) | | 0.6 | 69.1 | 30.8 |
| | Heat-resistant temperature (°C) | | 105 | 105 | 95 |

**Table 5**

| [Evaluation Results of Single-Layer Sheets] | | | | |
|---|---|---|---|---|
| Comparative Example No. | | | Comparative Example 4 | Comparative Example 5 |
| Polyester Resin | | | PET | Polyester (A-2) |
| Rubbery Polymer | | | - | Nipol BR1220 |
| | content (% by mass) | | - | 5 |
| | Absolute difference in refractive index from polyester resin (A) | | - | 0.02 |

| Evaluation Results | | | | |
|---|---|---|---|---|
| | Thickness of sheet (mm) | | 0.35 | 0.35 |
| | Average particle diameter of rubbery polymer (µm) | | - | 54 |
| | Film impact value (kg·cm/cm) | | | |
| | | Test temperature: 23°C | 1410 | 1020 |
| | | Test temperature: -20°C | 200 | 550 |
| | Total light transmittance (%) | | 91.0 | 71.4 |
| | Haze value (%) | | 0.8 | 60.8 |
| | Heat-resistant temperature (°C) | | 75 | 95 |

**Table 6**

| [Evaluation Results of Multilayer Sheet] | | | | |
|---|---|---|---|---|
| Comparative Example No. | | | | Comparative Example 6 |
| Skin Layer | | Polyester Resin (A) | | Polyester (A-1) |
| | | Rubbery Polymer | | - |
| | | | content (% by mass) | - |
| | | | Absolute difference in | |
| | | | refractive index from | - |
| | | | polyester resin (A) | |
| Core Layer | | | | PET |

| Evaluation Results | | | | |
|---|---|---|---|---|
| | Thickness of sheet (mm) | | | 0.35 |
| | Average particle diameter of rubbery polymer (µm) | | | - |
| | Film impact value (kg·cm/cm) | | | |
| | | Test temperature: 23°C | | 1320 |
| | | Test temperature: -20°C | | 190 |
| | Total light transmittance (%) | | | 91.4 |
| | Haze value (%) | | | 1.1 |
| | Heat-resistant temperature (°C) | | | 90 |

The single-layer sheet of Comparative Example 1 not containing at all a rubbery polymer was poor in impact resistance and was especially poor in impact resistance at low temperature. The single-layer sheet of Comparative Example 2 in which the absolute difference in the refractive index from the polyester resin was more than 0.02 was poor in transparency as the total light transmittance thereof was low and the haze thereof was high. The single-layer sheets of Comparative Examples 3 and 5 both containing a rubbery polymer but not a core/shell type rubber were poor in transparency as the total light transmittance thereof was low and the haze thereof was high. The single-layer sheet of Comparative Example 4, in which the polyester resin did not contain at all a diol unit having a cyclic acetal skeleton and which did not contain at all a rubbery polymer, was poor in heat resistance and was poor in impact resistance, especially impact resistance at low temperature. The multilayer sheet of Comparative Example 6 not containing at all a rubbery polymer was poor in impact resistance, especially impact resistance at low temperature.
As opposed to these, the sheets of Examples 1 to 3, formed of the polyester resin composition of the present invention, and the multilayer sheets of Examples 4 to 6, having a layer of the polyester resin composition of the present invention, all satisfy excellent transparency, heat resistance and impact resistance. In Examples 1 to 6, the total light transmittance was from 90.5 to 91.7% and was high, the haze was from 1.1 to 4.8% and was low; and as compared with that in Comparative Example 1 not containing rubber, the transparency in these Examples was not worsened. In addition, in these Examples, the heat-resistant temperature was from 95 to 145°C, and as compared with that in Comparative Example 1, the heat resistance in these Examples was not worsened. On the other hand, the film impact value in Examples 1 to 6 was larger than that in Comparative Example 1; and it is understood that, in Examples 1 to 6, the impact resistance was enhanced not detracting from the transparency and the heat resistance.

### INDUSTRIAL APPLICABILITY

The polyester resin composition of the present invention satisfies excellent transparency, heat resistance and impact resistance all at a time. Accordingly, the polyester resin composition of the present invention can be widely utilized in the form of containers such as bottles and the like, as well as injection-molded articles, foams, wrapping materials such as films, sheets and the like, in various fields of an electric/electronic device field of OA appliances, information/communication appliances, home electrical appliances and the like, an automotive field, a food field, an architecture field, and the like.

## Claims

1. A polyester resin composition comprising 70 to 99.5% by mass of a polyester resin (A) which comprises a dicarboxylic acid unit and a diol unit and in which 1 to 60 mol% of the diol unit is a diol unit having a cyclic acetal skeleton, and 0.5 to 30% by mass of a core/shell type rubber which has an average particle size of 1 µm or less and which exhibits an absolute difference between the refractive index thereof and the refractive index of the polyester resin (A) is 0.02 or less.

2. The polyester resin composition according to claim 1, wherein the core/shell type rubber is a methyl methacrylate-butadiene-styrene-series core/shell type rubber.

3. The polyester resin composition according to claim 1 or 2, wherein the melt viscosity of the polyester resin (A), as measured at a temperature of 240°C and a shear rate of 100 sec⁻¹, falls within a range of from 700 to 5,000 Pa·s.

4. The polyester resin composition according to any of claims 1 to 3,
wherein the diol unit having the cyclic acetal skeleton is a diol unit derived from a diol represented by the following formula (1) or (2): 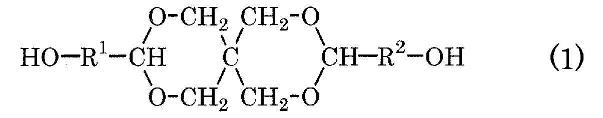 wherein R¹ and R² each independently represent a hydrocarbon group selected from the group consisting of an aliphatic hydrocarbon group having from 1 to 10 carbon atoms, an alicyclic hydrocarbon group having from 3 to 10 carbon atoms, and an aromatic hydrocarbon group having from 6 to 10 carbon atoms; 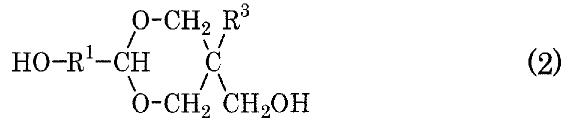 wherein R¹ has the same meaning as above; and R³ represents a hydrocarbon group selected from the group consisting of an aliphatic hydrocarbon group having from 1 to 10 carbon atoms, an alicyclic hydrocarbon group having from 3 to 10 carbon atoms, and an aromatic hydrocarbon group having from 6 to 10 carbon atoms.

5. The polyester resin composition according to any of claims 1 to 4,
wherein the diol unit having the cyclic acetal skeleton is a diol unit derived from 3,9-bis(1,1-dimethyl-2-hydroxyethyl)-2,4,8,10-tetroxaspiro[5.5]undecane, or a diol unit derived from 5-methylol-5-ethyl-2-(1,1-dimethyl-2-hydroxyethyl)-1,3-dioxane.

6. The polyester resin composition according to any of claims 1 to 5,
wherein the other diol unit than the diol unit having the cyclic acetal skeleton is a diol unit derived from at least one diol selected from the group consisting of ethylene glycol, diethylene glycol, trimethylene glycol, 1,4-butanediol and 1,4-cyclohexanedimethanol.

7. The polyester resin composition according to any of claims 1 to 6,
wherein the dicarboxylic acid unit is a dicarboxylic acid unit derived from at least one dicarboxylic acid selected from the group consisting of terephthalic acid, isophthalic acid, 1,4-naphthalenedicarboxylic acid, 1,5-naphthalenedicarboxylic acid, 2,6-naphthalenedicarboxylic acid and 2,7-naphthalenedicarboxylic acid.

8. A sheet of the polyester resin composition according to any of claims 1 to 7.

9. A multilayer sheet having at least one layer of the polyester resin composition according to any of claims 1 to 7.

10. The multilayer sheet according to claim 9, having at least one resin layer mainly containing at least one resin selected from the group consisting of a polyester resin, a polycarbonate resin, an acrylic resin, a polystyrene resin and a polymethyl methacrylate-styrene resin.

11. An injection-molded article of the polyester resin composition according to any of claims 1 to 7.
